# EUROPEAN PATENT SPECIFICATION

(11) **EP 3 830 184 B1**
(45) Date of publication and mention of the grant of the patent: **30.04.2025**
(21) Application number: 19758539.1
(22) Date of filing: 31.07.2019
(51) Int. Cl.: C08L 5/16

(54) **SOLID STATE FORMS OF SUGAMMADEX SODIUM**
FESTE FORMEN VON SUGAMMADEX-NATRIUM
FORMES SOLIDES DE SUGAMMADEX SODIQUE

(30) Priority: 02.08.2018 US 201862713901 P
(43) Date of publication of application: 09.06.2021
(73) Proprietor: TAPI Croatia Industries Ltd, 10291 Prigorje Brdovecko (HR)
(72) Inventor: RÁCZ, Csilla Némethné, 4031 Debrecen (HU); KERTI, Gábor, 4251 Hajdúsámson-Sámsonkert (HU); TÓTH, Miklós, 4033 Debrecen (HU); NAGY, Gábor, 4029 Debrecen (HU)
(74) Representative: D Young & Co LLP
(86) International application number: PCT/US2019/044261
(87) International publication number: WO 2020/028448

(56) References cited:
- WO-A1-01/40316
- CN-A- 107 400 182
- US-A1- 2018 016 359

## Description

### TECHNICAL FIELD

The present disclosure relates to solid state forms of Sugammadex sodium, processes for preparation thereof and pharmaceutical compositions thereof.

### BACKGROUND OF THE DISCLOSURE

Sugammadex, 6-per-deoxy-6-per-(2-carboxyethyl)thio-γ-cyclodextrin is administrated as a sodium salt which has the following chemical structure:

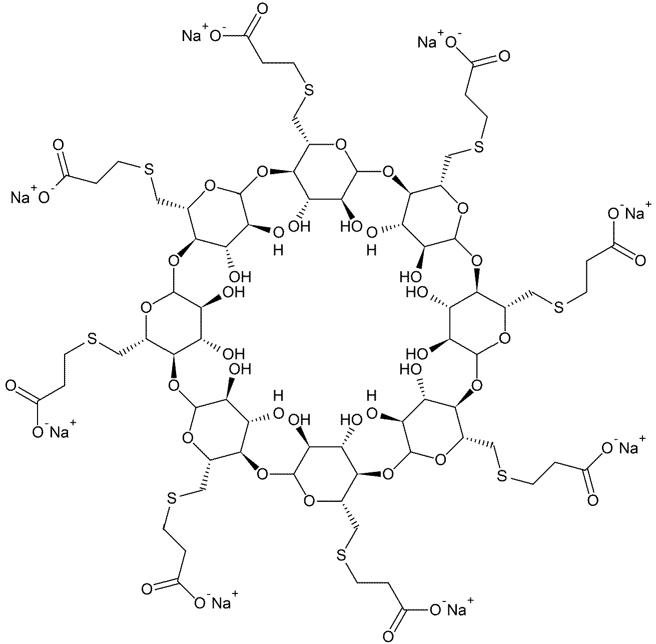

Sugammadex sodium is a selective relaxant binding agent (SRBA) developed by Akzo Nobel N.V. and Merck Sharp & Dohme for the reversal of neuromuscular blockade by the agent Rocuronium in general anesthesia.

Sugammadex sodium is disclosed in WO0140316. WO0112202 discloses its use in reversal of drug-induced neuromuscular block. US2018/0016359 discloses a synthetic pathway to Sugammadex sodium from γ-cyclodextrin.

Polymorphism, the occurrence of different crystal forms, is a property of some molecules and molecular complexes. A single compound, like Sugammadex sodium, may give rise to a variety of polymorphs having distinct crystal structures and physical properties like melting point, thermal behaviors (e.g. measured by thermogravimetric analysis - "TGA", or differential scanning calorimetry - "DSC"), X-ray powder diffraction (XRPD) pattern, infrared absorption fingerprint, Raman absorption fingerprint, and solid state (¹³C-) NMR spectrum. One or more of these techniques may be used to distinguish different polymorphic forms of a compound.

Different solid state forms (including solvated forms) of an active pharmaceutical ingredient may possess different properties. Such variations in the properties of different solid state forms and solvates may provide a basis for improving formulation, for example, by facilitating better processing or handling characteristics, improving the dissolution profile, or improving stability (polymorph as well as chemical stability) and shelf-life. These variations in the properties of different solid state forms may also provide improvements to the final dosage form, for instance, if they serve to improve bioavailability. Different solid state forms and solvates of an active pharmaceutical ingredient may also give rise to a variety of polymorphs or crystalline forms, which may in turn provide additional opportunities to use variations in the properties and characteristics of a solid active pharmaceutical ingredient for providing an improved product.

Discovering new solid state forms and solvates of a pharmaceutical product can provide materials having desirable processing properties, such as ease of handling, ease of processing, storage stability, and ease of purification or as desirable intermediate crystal forms that facilitate conversion to other polymorphic forms. New polymorphic forms and solvates of a pharmaceutically useful compound can also provide an opportunity to improve the performance characteristics of a pharmaceutical product (dissolution profile, bioavailability, etc.). It enlarges the repertoire of materials that a formulation scientist has available for formulation optimization, for example by providing a product with different properties, e.g., a different crystal habit, higher crystallinity or polymorphic stability which may offer better processing or handling characteristics, improved dissolution profile, or improved shelf-life.

For at least these reasons, there is a need for additional solid state forms (including solvated forms) of Sugammadex sodium.

### SUMMARY OF THE DISCLOSURE

The present invention relates to a process for the preparation of crystalline Form 6 of Sugammadex sodium as defined in the claims. The process is reproducible in a reliable manner and enables high quality, large scale production of form 6 of Sugammadex sodium.

The form 6 of Sugammadex sodium can be used for preparing other solid state forms of Sugammadex sodium, other Sugammadex salts and their solid state forms thereof.

The form 6 of Sugammadex sodium can be used in the preparation of pharmaceutical compositions and/or formulations, optionally for the reversal of neuromuscular blockade by anesthetic agents, such as Rocuronium, in general anesthesia.

The form 6 of Sugammadex sodium for the preparation of pharmaceutical compositions and/or formulations is also disclosed

Processes to prepare said pharmaceutical formulations of Sugammadex sodium may comprise combining the form 6 of Sugammadex sodium and at least one pharmaceutically acceptable excipient.

The form 6 of Sugammadex sodium can be used as medicaments, particularly for the reversal of neuromuscular blockade by anesthetic agents, such as Rocuronium, in general anesthesia.

Disclosed is a method of reversing neuromuscular blockade by anesthetic agents, such as Rocuronium, in general anesthesia; comprising administering a therapeutically effective amount of the form 6 of Sugammadex sodium or at least one of the herein described pharmaceutical compositions or formulations, to a subject in need of the treatment.

Disclosed is the use of the form 6 of Sugammadex sodium, or at least one of the above pharmaceutical compositions or formulations for the manufacture of medicaments for reversal of neuromuscular blockade by anesthetic agents, such as Rocuronium, in general anesthesia.

### BRIEF DESCRIPTION OF THE FIGURES

Figure 1 shows an X-ray powder diffractogram (XRPD) of crystalline Form 6 of Sugammadex sodium.
Figure 2 shows an XRPD of crystalline Form 9 of Sugammadex sodium.

### DETAILED DESCRIPTION OF THE DISCLOSURE

The present invention relates to a process for the preparation of Form 6 of Sugammadex sodium, which is reproducible in a reliable manner and in high quality, in large scale production. The invention relates to a process for preparing Form 6 of Sugammadex sodium, which is reproducible and enables the consistent production of Form 6 of Sugammadex sodium, particularly Form 6 having high purity. The process is therefore highly suitable for the large scale preparation. Disclosed is Form 9 of Sugammadex sodium. Form 9 of Sugammadex sodium can be readily prepared from Form 6 of Sugammadex sodium.

Also disclosed is the conversion of the solid state forms of Sugammadex sodium to other solid state forms of Sugammadex sodium.

The solid state form of Sugammadex sodium prepared according to the present disclosure may have advantageous properties selected from at least one of: chemical or polymorphic purity, flowability, solubility, dissolution rate, bioavailability, morphology or crystal habit, stability - such as chemical stability as well as thermal and mechanical stability with respect to polymorphic conversion, stability towards dehydration and/or storage stability, a lower degree of hygroscopicity, low content of residual solvents and advantageous processing and handling characteristics such as compressibility, or bulk density.

A crystal form may be referred to herein as being characterized by graphical data "as depicted in" a Figure. Such data include, for example, powder X-ray diffractograms and solid state NMR spectra. As is well-known in the art, the graphical data potentially provides additional technical information to further define the respective solid state form (a so-called "fingerprint") which can not necessarily be described by reference to numerical values or peak positions alone. In any event, the skilled person will understand that such graphical representations of data may be subject to small variations, e.g., in peak relative intensities and peak positions due to factors such as variations in instrument response and variations in sample concentration and purity, which are well known to the skilled person. Nonetheless, the skilled person would readily be capable of comparing the graphical data in the Figures herein with graphical data generated for an unknown crystal form and confirm whether the two sets of graphical data are characterizing the same crystal form or two different crystal forms. A crystal form of Sugammadex sodium referred to herein as being characterized by graphical data "as depicted in" a Figure will thus be understood to include any crystal forms of the Sugammadex sodium, characterized with the graphical data having such small variations, as are well known to the skilled person, in comparison with the Figure.

A solid state form (or polymorph) may be referred to herein as polymorphically pure or as substantially free of any other solid state (or polymorphic) forms. As used herein in this context, the expression "substantially free of any other forms" will be understood to mean that the solid state form contains about 20% or less, about 10% or less, about 5% or less, about 2% or less, about 1% or less, or 0% of any other forms of the subject compound as measured, for example, by XRPD. Thus, the solid state form of Sugammadex sodium described herein as is substantially free of any other solid state forms would be understood to contain greater than about 80% (w/w), greater than about 90% (w/w), greater than about 95% (w/w), greater than about 98% (w/w), greater than about 99% (w/w), or 100% of the subject solid state form of Sugammadex sodium. Accordingly, the solid state forms of Sugammadex sodium referred to herein may contain from about 1% to about 20% (w/w), from about 5% to about 20% (w/w), or from about 5% to about 10% (w/w) of one or more other solid state forms of the same Sugammadex sodium.

Particularly, Form 6 of Sugammadex sodium referred to herein may contain: no more than about 20%, no more than about 10%, no more than about 5%, no more than about 2%, no more than about 1% or about 0% of any other solid state forms of Sugammadex sodium. Alternatively, Form 6 of Sugammadex sodium referred to herein may contain: no more than about 20%, no more than about 10%, no more than about 5%, no more than about 2%, no more than about 1% or about 0% of any other crystalline forms of Sugammadex sodium. Form 6 of Sugammadex sodium referred to herein may contain: no more than about 20%, no more than about 10%, no more than about 5%, no more than about 2%, no more than about 1% or about 0% of amorphous Sugammadex sodium.

Form 9 of Sugammadex sodium referred to herein preferably contains: no more than about 20%, no more than about 10%, no more than about 5%, no more than about 2%, no more than about 1% or about 0% of any other solid state forms of Sugammadex sodium. Alternatively, Form 9 of Sugammadex sodium referred to herein may contain: no more than about 20%, no more than about 10%, no more than about 5%, no more than about 2%, no more than about 1% or about 0% of any other crystalline forms of Sugammadex sodium. Form 9 of Sugammadex sodium referred to herein may contain: no more than about 20%, no more than about 10%, no more than about 5%, no more than about 2%, no more than about 1% or about 0% of amorphous Sugammadex sodium. As used herein, unless stated otherwise, XRPD peaks reported herein are optionally measured using CuK_{α} radiation, λ = 1.54Å.

As used herein, the term "isolated" in reference to solid state forms of Sugammadex sodium of the present disclosure corresponds to solid state form of Sugammadex sodium that is physically separated from the reaction mixture in which it is formed.

A thing, *e.g.,* a reaction mixture, may be characterized herein as being at, or allowed to come to "room temperature", often abbreviated "RT." This means that the temperature of the thing is close to, or the same as, that of the space, *e.g.,* the room or fume hood, in which the thing is located. Typically, room temperature is from about 20°C to about 30°C, about 22°C to about 27°C, or about 25°C.

A process or step may be referred to herein as being carried out "overnight." This refers to a time interval, e.g., for the process or step, that spans the time during the night, when that process or step may not be actively observed. This time interval is from about 8 to about 20 hours, about 10 to about 18 hours, or about 16 hours.

The term "solvate", as used herein and unless indicated otherwise, refers to a crystal form that incorporates a solvent in the crystal structure. When the solvent is water, the solvate is often referred to as a "hydrate." The solvent in a solvate may be present in either a stoichiometric or in a non-stoichiometric amount.

As used herein, and unless stated otherwise, the term "anhydrous" in relation to crystalline Sugammadex sodium relates to crystalline Sugammadex sodium which does not include any crystalline water (or other solvents) in a defined, stoichiometric amount within the crystal. Moreover, an "anhydrous" form does not contain more than about 1% (w/w) of either water or organic solvents as measured for example by TGA.

The amount of solvent employed in a chemical process, e.g., a reaction or crystallization, may be referred to herein as a number of "volumes" or "vol" or "V." For example, a material may be referred to as being suspended in 10 volumes (or 10 vol or 10V) of a solvent. In this context, this expression would be understood to mean milliliters of the solvent per gram of the material being suspended, such that suspending 5 grams of a material in 10 volumes of a solvent means that the solvent is used in an amount of 10 milliliters of the solvent per gram of the material that is being suspended or, in this example, 50 mL of the solvent. In another context, the term "v/v" may be used to indicate the number of volumes of a solvent that are added to a liquid mixture based on the volume of that mixture. For example, adding methyl tert-butyl ether (MTBE) (1.5 v/v) to a 100 ml reaction mixture would indicate that 150 mL of MTBE was added.

As used herein, the term "reduced pressure" refers to a pressure of from about 10 µbar to 50 mbar.

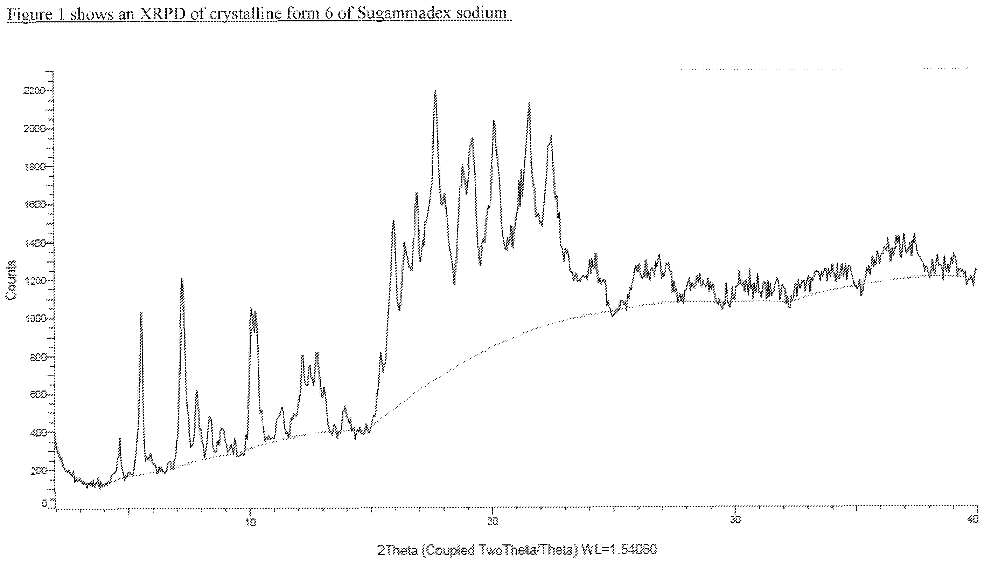

As referred to herein, the crystalline Form 6 of Sugammadex sodium can be characterized by data selected from one or more of the following: an XRPD pattern having peaks at 5.5, 7.3, 10.2, 17.7 and 20.2 degrees 2-theta ± 0.2 degrees 2-theta; an XRPD pattern as depicted in Figure 1; and combinations of these data.

As referred to herein, crystalline Form 6 of Sugammadex sodium may be further characterized by the XRPD pattern having peaks at 5.5, 7.3, 10.2, 17.7 and 20.2 degrees 2-theta ± 0.2 degrees 2-theta, and also having one, two, three or four additional peaks selected from 7.8, 16.0, 19.1, 21.5 and 22.4 degrees two theta ± 0.2 degrees two theta.

As referred to herein, crystalline Form 6 of Sugammadex sodium may be a hydrate form. Typically, it has water content of from about 7% to about 15% (w/w), more preferably about 7% to about 12% (w/w), as measured by appropriate methods, such as KF or TGA.

As referred to herein, crystalline Form 6 of Sugammadex sodium may be characterized by each of the above characteristics alone/or by all possible combinations, e.g. by XRPD pattern having peaks at 5.5, 7.3, 10.2, 17.7 and 20.2 degrees 2-theta ± 0.2 degrees 2-theta and an XRPD pattern as depicted in Figure 1.

Particularly, the present disclosure comprises Form 6 produced in high scale production.

Disclosed is a process for preparation of Form 6, comprising crystallization of Sugammadex sodium from a mixture comprising water as a solvent and methanol as an anti-solvent. The crystallization comprises providing a solution of the Sugammadex sodium in water and combining the solution with methanol to obtain a suspension. Typically, the solution is provided at temperature of from about 50°C to about 80°C, preferably 55°C. Combining the solution with the anti-solvent can be done by direct addition, i.e. the anti-solvent is added to the solution. The process for preparing crystalline Form 6 of Sugammadex sodium may further comprise recovering the said crystalline form. The recovery may be done, for example, by filtering the suspension, for example by vacuum filtration; optionally washing; and drying. Preferably, drying at temperature of about 55°C, preferably under vacuum.

The present invention provides a process for the preparation of crystalline Form 6 of Sugammadex sodium, comprising: crystallization of Sugammadex sodium from a mixture comprising water and methanol, wherein the water is present in an amount of about 1 to about 10 ml per gram of Sugammadex sodium, and the methanol is present in an amount of about 15 to about 30 ml per gram of Sugammadex sodium, wherein the process comprises:
(i) adding methanol to a solution of Sugammadex sodium in water at a temperature of about 45°C to about 70°C;
(ii) cooling the resulting suspension to about 18°C to about 40°C; and
(iii) optionally stirring the suspension for about 0.5 to about 4 hours.

Preferably, the solution of Sugammadex sodium comprises water in an amount of about 1 to about 5 ml per gram of Sugammadex sodium, or more preferably about 2 to about 4 ml per gram of Sugammadex sodium, such as an amount of about 3 ml per gram of Sugammadex sodium.

The methanol is preferably added in an amount of amount of about 15 to about 28 ml per gram of Sugammadex sodium, or about 15 to about 25 ml per gram of Sugammadex sodium, or about 18 to about 22 ml per gram of Sugammadex sodium, or more preferably about 19 to about 21 ml per gram of Sugammadex sodium.

Preferably, in the process, the Sugammadex sodium is crystallized in mixture of methanol and water in a volume ratio of methanol to water of about 20:1 to about 3:1, or about 15:1 to about 4:1, or about 10:1 to about 5:1, or about 8:1 to about 5:1, or more preferably about 7:1 to about 6:1.

Preferably, the addition of methanol is carried out slowly, e.g. dropwise. Thus, preferably, step (i) comprises slow addition of methanol to the aqueous Sugammadex sodium solution, preferably at a rate of about 1 ml/min to about 50 ml/min, or about 1 ml/min to about 35 ml/min.

Preferably in any aspect of the present process, methanol is added to a solution of Sugammadex sodium in water which is at a temperature of about 45°C to about 65°C, or particularly about 50°C to about 60°C.

After the addition of methanol, the mixture is preferably cooled, typically to room temperature. Preferably the cooling is to a temperature of about 18°C to about 30°C, or to a temperature of about 18°C to about 25°C, or to a temperature of about 20°C.

The cooling may be carried out passively. Alternatively the cooling may be carried out actively. Preferably, the cooling is carried out over a period of about 0.5 to about 8 hours, or about 0.5 to about 5 hours, or about 0.5 to about 3 hours.

In a preferred process according to any aspect or embodiment of the present process, following the cooling step, the suspension is stirred for a suitable period of time. More preferably, the suspension is stirred for about 0.5 to about 8 hours, or about 0.5 to about 5 hours, or about 0.5 to about 2 hours.

The Sugammadex sodium is preferably isolated. Preferably, the isolation is carried out by filtration.

Following isolation, the Sugammadex sodium may be washed with a mixture of methanol and water. The methanol and water mixture preferably comprises methanol and water in a volume ratio of: about 2:1 to about 15:1, about 4:1 to about 10:1, about 5:1 to about 8:1 or particularly about 6:1 to about 7:1.

Preferably, the Sugammadex sodium is dried, preferably under reduced pressure.

In any aspect or embodiment of the process, the drying is preferably conducted at a temperature of about 40°C to about 80°C, or at a temperature of about 45°C to about 75°C, or at a temperature of about 50°C to about 65°C, and particularly at a temperature of about 50°C to about 60°C.

Preferably, the drying is carried out over a period of about 4 to about 90 hours, preferably about 8 to about 60 hours, more preferably about 10 to about 48 hours, and most preferably about 15 to about 24 hours.

The drying is preferably carried out under an inert atmosphere, preferably under nitrogen or argon.

According to any aspect of the present invention, the drying step is preferably carried out in a vacuum or under reduced pressure, in an inert atmosphere, preferably under nitrogen, at a temperature of about 50°C to about 65°C, and most preferably about 50°C to about 60°C.

The process of any aspect of embodiment of the present invention may further comprise combining the Sugammadex sodium Form 6 with at least one pharmaceutically acceptable excipient to provide a pharmaceutical composition, preferably wherein the pharmaceutical composition is a solution for injection or for infusion.

The processes described herein advantageously enables the consistent production of crystalline Sugammadex sodium Form 6. The process of any aspect or embodiment of the present invention for preparing crystalline Form 6 of Sugammadex sodium particularly enables the consistent and reproducible production of the product without significant batch-to-batch variations in the product. Particularly, the product can be obtained having a consistent degree of polymorphic purity and crystallinity.

The crystalline Sugammadex sodium Form 6 obtainable by the process of any aspect or embodiment of the invention as discussed above preferably contains: no more than about 20%, no more than about 10%, no more than about 5%, no more than about 2%, no more than about 1% or about 0% of any other crystalline forms of Sugammadex sodium.

More preferably, crystalline Sugammadex sodium obtainable by the process of the present invention preferably contains: no more than about 20%, no more than about 10%, no more than about 5%, no more than about 2%, no more than about 1% or about 0% of other solid state forms of Sugammadex sodium.

Most preferably, the crystalline Sugammadex sodium obtainable by the process of the present invention contains: no more than about 20%, no more than about 10%, no more than about 5%, no more than about 2%, no more than about 1% or about 0% of amorphous Sugammadex sodium.

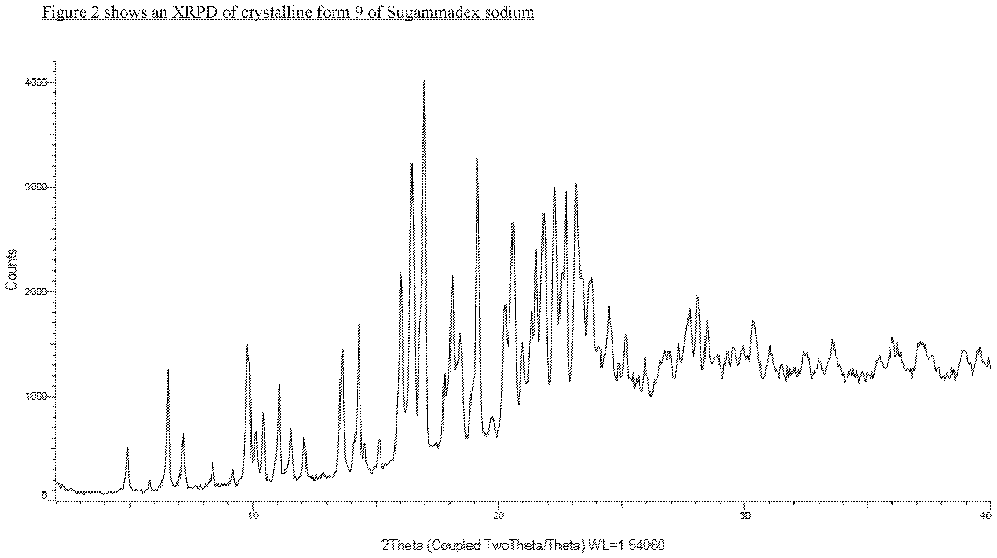

Disclosed is a crystalline form of Sugammadex sodium designated as Form 9. The crystalline Form 9 of Sugammadex sodium can be characterized by data selected from one or more of the following: an XRPD pattern having peaks at 6.6, 9.8, 16.5, 16.9 and 19.1 degrees 2-theta ± 0.2 degrees 2-theta; an XRPD pattern as depicted in Figure 2; and combinations of these data.

Crystalline Form 9 of Sugammadex sodium may be further characterized by the XRPD pattern having peaks at 6.6, 9.8, 16.5, 16.9 and 19.1 degrees 2-theta ± 0.2 degrees 2-theta, and also having one, two, three or four additional peaks selected from 11.0, 13.6, 14.3, 16.0 and 20.6 degrees two theta ± 0.2 degrees two theta.

Crystalline Form 9 of Sugammadex sodium may be a hydrate.

Crystalline Form 9 of Sugammadex sodium may be characterized by each of the above characteristics alone/or by all possible combinations, e.g. by XRPD pattern having peaks at 6.6, 9.8, 16.5, 16.9 and 19.1 degrees 2-theta ± 0.2 degrees 2-theta and an XRPD pattern as depicted in Figure 2.

Form 9 of Sugammadex sodium can be prepared by a process comprising maintaining crystalline form 6 of Sugammadex sodium as described in any aspect of the present invention at a relative humidity of about 50 to about 100%, preferably at room temperature for a suitable period of time to obtain Form 9 of Sugammadex sodium. A suitable period of time is preferably about 3 to about 12 days, preferably about 4 to about 10 days, and more preferably about 5 to about 8 days. More preferably, Form 9 of Sugammadex sodium is prepared by maintaining Form 6 of Sugammadex sodium at relative humidity (RH) of about 80%, for a period of about one week, preferably at room temperature.

The solid state forms of Sugammadex sodium of the present disclosure can be for uses in the preparation of other solid state forms of Sugammadex sodium, other Sugammadex salts and their solid state forms thereof.

Disclosed are processes for preparing other solid state forms of Sugammadex sodium, other Sugammadex salts and their solid state forms thereof. The process comprises preparing any one or a combination of the solid state forms of the present disclosure, and converting it to other solid state forms of Sugammadex sodium, or to other Sugammadex salts and their solid state forms.

The described solid state forms of Sugammadex sodium may be used in the preparation of pharmaceutical compositions and/or formulations, optionally for the reversal of neuromuscular blockade by anesthetic agents, such as Rocuronium, in general anesthesia.

The described solid state form of Sugammadex sodium may be used for the preparation of pharmaceutical compositions and/or formulations.

Disclosed are pharmaceutical formulations comprising any one or a combination of the described solid state forms of Sugammadex sodium and at least one pharmaceutically acceptable excipient.

Disclosed are processes to prepare said pharmaceutical formulations of Sugammadex sodium comprising combining any one or a combination of the described solid state forms and at least one pharmaceutically acceptable excipient.

Pharmaceutical formulations as referred to herein contain any one or a combination of the solid state forms of Sugammadex sodium of the present disclosure, particularly crystalline Sugammadex sodium Form 6. In addition to the active ingredient, the pharmaceutical formulations of the present disclosure can contain one or more excipients. Excipients are added to the formulation for a variety of purposes.

Diluents increase the bulk of a solid pharmaceutical composition, and can make a pharmaceutical dosage form containing the composition easier for the patient and caregiver to handle. Diluents for solid compositions include, for example, microcrystalline cellulose (e.g. Avicel^{®}), microfine cellulose, lactose, starch, pregelatinized starch, calcium carbonate, calcium sulfate, sugar, dextrates, dextrin, dextrose, dibasic calcium phosphate dihydrate, tribasic calcium phosphate, kaolin, magnesium carbonate, magnesium oxide, maltodextrin, mannitol, polymethacrylates (e.g. Eudragit^{®}), potassium chloride, powdered cellulose, sodium chloride, sorbitol, and talc.

Solid pharmaceutical compositions that are compacted into a dosage form, such as a tablet, can include excipients whose functions include helping to bind the active ingredient and other excipients together after compression. Binders for solid pharmaceutical compositions include acacia, alginic acid, carbomer (e.g. carbopol), carboxymethylcellulose sodium, dextrin, ethyl cellulose, gelatin, guar gum, hydrogenated vegetable oil, hydroxyethyl cellulose, hydroxypropyl cellulose (e.g. Klucel^{®}), hydroxypropyl methyl cellulose (e.g. Methocel^{®}), liquid glucose, magnesium aluminum silicate, maltodextrin, methylcellulose, polymethacrylates, povidone (e.g. Kollidon^{®}, Plasdone^{®}), pregelatinized starch, sodium alginate, and starch.

The dissolution rate of a compacted solid pharmaceutical composition in the patient's stomach can be increased by the addition of a disintegrant to the composition. Disintegrants include alginic acid, carboxymethylcellulose calcium, carboxymethylcellulose sodium (e.g. Ac-Di-Sol^{®}, Primellose^{®}), colloidal silicon dioxide, croscarmellose sodium, crospovidone (e.g. Kollidon^{®}, Polyplasdone^{®}), guar gum, magnesium aluminum silicate, methyl cellulose, microcrystalline cellulose, polacrilin potassium, powdered cellulose, pregelatinized starch, sodium alginate, sodium starch glycolate (e.g. Explotab^{®}), and starch.

Glidants can be added to improve the flowability of a non-compacted solid composition and to improve the accuracy of dosing. Excipients that can function as glidants include colloidal silicon dioxide, magnesium trisilicate, powdered cellulose, starch, talc, and tribasic calcium phosphate.

When a dosage form such as a tablet is made by the compaction of a powdered composition, the composition is subjected to pressure from a punch and dye. Some excipients and active ingredients have a tendency to adhere to the surfaces of the punch and dye, which can cause the product to have pitting and other surface irregularities. A lubricant can be added to the composition to reduce adhesion and ease the release of the product from the dye. Lubricants include magnesium stearate, calcium stearate, glyceryl monostearate, glyceryl palmitostearate, hydrogenated castor oil, hydrogenated vegetable oil, mineral oil, polyethylene glycol, sodium benzoate, sodium lauryl sulfate, sodium stearyl fumarate, stearic acid, talc, and zinc stearate.

Flavoring agents and flavor enhancers make the dosage form more palatable to the patient. Common flavoring agents and flavor enhancers for pharmaceutical products that can be included in the composition of the present disclosure include maltol, vanillin, ethyl vanillin, menthol, citric acid, fumaric acid, ethyl maltol, and tartaric acid.

Solid and liquid compositions can also be dyed using any pharmaceutically acceptable colorant to improve their appearance and/or facilitate patient identification of the product and unit dosage level.

In liquid pharmaceutical compositions of the present disclosure, Sugammadex sodium and any other solid excipients are dissolved or suspended in a liquid carrier such as water, vegetable oil, alcohol, polyethylene glycol, propylene glycol, or glycerin.

Liquid pharmaceutical compositions can contain emulsifying agents to disperse uniformly throughout the composition an active ingredient or other excipient that is not soluble in the liquid carrier. Emulsifying agents that can be useful in liquid compositions of the present disclosure include, for example, gelatin, egg yolk, casein, cholesterol, acacia, tragacanth, chondrus, pectin, methyl cellulose, carbomer, cetostearyl alcohol, and cetyl alcohol.

Liquid pharmaceutical compositions of the present disclosure can also contain a viscosity enhancing agent to improve the mouth-feel of the product and/or coat the lining of the gastrointestinal tract. Such agents include acacia, alginic acid bentonite, carbomer, carboxymethylcellulose calcium or sodium, cetostearyl alcohol, methyl cellulose, ethylcellulose, gelatin guar gum, hydroxyethyl cellulose, hydroxypropyl cellulose, hydroxypropyl methyl cellulose, maltodextrin, polyvinyl alcohol, povidone, propylene carbonate, propylene glycol alginate, sodium alginate, sodium starch glycolate, starch tragacanth, and xanthan gum.

Sweetening agents such as sorbitol, saccharin, sodium saccharin, sucrose, aspartame, fructose, mannitol, and invert sugar can be added to improve the taste.

Preservatives and chelating agents such as alcohol, sodium benzoate, butylated hydroxyl toluene, butylated hydroxyanisole, and ethylenediamine tetraacetic acid can be added at levels safe for ingestion to improve storage stability.

According to the present disclosure, a liquid composition can also contain a buffer such as gluconic acid, lactic acid, citric acid, or acetic acid, sodium gluconate, sodium lactate, sodium citrate, or sodium acetate. Selection of excipients and the amounts used can be readily determined by the formulation scientist based upon experience and consideration of standard procedures and reference works in the field.

The solid compositions of the present disclosure include powders, granulates, aggregates, and compacted compositions. The dosages include dosages suitable for oral, buccal, rectal, parenteral (including subcutaneous, intramuscular, and intravenous), inhalant, and ophthalmic administration. Although the most suitable administration in any given case will depend on the nature and severity of the condition being treated, the most preferred route of the present disclosure is oral. The dosages can be conveniently presented in unit dosage form and prepared by any of the methods well-known in the pharmaceutical arts.

Dosage forms include solid dosage forms like tablets, powders, capsules, suppositories, sachets, troches, and lozenges, as well as liquid syrups, suspensions, and elixirs.

The dosage form of the present disclosure can be a capsule containing the composition, preferably a powdered or granulated solid composition of the disclosure, within either a hard or soft shell. The shell can be made from gelatin and optionally contain a plasticizer such as glycerin and sorbitol, and an opacifying agent or colorant.

The active ingredient and excipients can be formulated into compositions and dosage forms according to methods known in the art.

A composition for tableting or capsule filling can be prepared by wet granulation. In wet granulation, some or all of the active ingredients and excipients in powder form are blended and then further mixed in the presence of a liquid, typically water, that causes the powders to clump into granules. The granulate is screened and/or milled, dried, and then screened and/or milled to the desired particle size. The granulate can then be tableted, or other excipients can be added prior to tableting, such as a glidant and/or a lubricant.

A tableting composition can be prepared conventionally by dry blending. For example, the blended composition of the actives and excipients can be compacted into a slug or a sheet and then comminuted into compacted granules. The compacted granules can subsequently be compressed into a tablet.

As an alternative to dry granulation, a blended composition can be compressed directly into a compacted dosage form using direct compression techniques. Direct compression produces a more uniform tablet without granules. Excipients that are particularly well suited for direct compression tableting include microcrystalline cellulose, spray dried lactose, dicalcium phosphate dihydrate, and colloidal silica. The proper use of these and other excipients in direct compression tableting is known to those in the art with experience and skill in particular formulation challenges of direct compression tableting.

A capsule filling of the present disclosure can comprise any of the aforementioned blends and granulates that were described with reference to tableting, but they are not subjected to a final tableting step.

A pharmaceutical formulation of Sugammadex sodium can be administered. Sugammadex sodium is preferably formulated for administration to a mammal, preferably a human, by injection. Sugammadex sodium can be formulated, for example, as a viscous liquid solution or suspension, preferably a clear solution, for injection. The formulation can contain one or more solvents. A suitable solvent can be selected by considering the solvent's physical and chemical stability at various pH levels, viscosity (which would allow for syringeability), fluidity, boiling point, miscibility, and purity. Suitable solvents include alcohol USP, benzyl alcohol NF, benzyl benzoate USP, and Castor oil USP. Additional substances can be added to the formulation such as buffers, solubilizers, and antioxidants, among others. Ansel et al., Pharmaceutical Dosage Forms and Drug Delivery Systems, 7th ed.

The solid state forms as well as the pharmaceutical compositions or formulations of the solid state forms of Sugammadex sodium referred to herein can be used as medicaments, particularly for the reversal of neuromuscular blockade by anesthetic agents, such as Rocuronium, in general anesthesia.

The present disclosure also provides methods of reversing neuromuscular blockade by anesthetic agents, such as Rocuronium, in general anesthesia; comprising administering a therapeutically effective amount of any one or a combination of the solid state forms of Sugammadex sodium or at least one of the herein described pharmaceutical compositions or formulations, to a subject in need of the treatment.

Disclosed are uses of the solid state forms of Sugammadex sodium and/or Sugammadex sodium, or at least one of the above pharmaceutical compositions or formulations for the manufacture of medicaments for reversal of neuromuscular blockade by anesthetic agents, such as Rocuronium, in general anesthesia.

Having described the disclosure with reference to certain preferred embodiments, other embodiments will become apparent to one skilled in the art from consideration of the specification. The disclosure is further illustrated by reference to the following examples describing in detail the preparation of the composition and methods of use of the disclosure.

### Analytical Methods

### X-ray powder diffraction method:

BRUKER D8 Advance X-ray powder diffractometer, CuKα radiation (λ = 1.5406 Å); Lynxeye XE detector, low amount PMMA sample holder with zero background plate was used. Prior to analysis, the dry samples were gently ground by means of mortar and pestle in order to obtain a fine powder. The ground sample was adjusted into a cavity of the sample holder and the surface of the sample was smoothed by means of a cover glass.

Measurement parameters:
Sample: Spin mode, rotation speed 30 rpm;
Scan range: 2 - 40 degrees 2-theta;
Scan mode: continuous;
Step size: 0.05 ± 0.005 degrees;
Time per step: 0.5 sec;
Divergence slit: V20

The accuracy of peak positions is defined as ± 0.2 degrees two theta due to experimental differences like instrumentations, sample preparations etc.

### EXAMPLES

Sugammadex and Sugammadex sodium can be prepared according to the process disclosed in the literature, for example the process described in WO0140316. Example 2 relates to the synthesis of Form 9 of Sugammadex sodium and is provided for reference only.

### Example 1: Preparation of the crystalline Sugammadex sodium Form 6

Sugammadex sodium (50 g) was dissolved in water (150 ml) under nitrogen, at temperature of 25°C, under stirring. The solution was heated to temperature of about 55°C over a period of 35 minutes. The solution was maintained at temperature of 55°C and methanol was added (975 ml) over a period of 30 minutes. The obtained suspension was cooled to temperature of about 20°C, over a period of about 2 hours. The cooled suspension was further maintained and stirred at this temperature for 1 hour. The precipitated solid was filtered and washed with mixture of water and methanol (ratio 1:6.4; 50 ml). The wet solid material was stirred for 3 hours at temperature of about 25°C, then it was heated to a temperature of 55°C over a period of 2 hours. The solid was further dried for 24 hours at a temperature of 55 °C under vacuum in nitrogen atmosphere. The dried solid was analyzed by PXRD, Form 6 was obtained. A PXRD pattern is shown in Figure 1.

### Example 2: Preparation of the crystalline Sugammadex sodium Form 9

250 mg Sugammadex sodium (Form 6) was exposed to 80% relative humidity at room temperature for one week. Polymorphic form of the material was analyzed after storage by PXRD, Form 9 was obtained. PXRD pattern is shown in Figure 2.

### Example 3: Preparation of the crystalline Sugammadex sodium Form 6

Sugammadex sodium (10 g) was dissolved in water (25 ml) under nitrogen, at temperature of 25°C, under stirring. Active carbon was added to the solution at 25°C and the solution was heated to temperature of about 55°C and maintained at this temperature under stirring for a period of 40 minutes. The solution was filtered and the active carbon was removed and the filter was washed with water (5 ml). Then, methanol (195 ml) was added over a period of about 90 minutes and precipitation occurred. The obtained suspension was cooled to temperature of about 20°C, over a period of about 2 hours. The cooled suspension was further maintained and stirred at this temperature for 1 hour. The precipitated solid was filtered and washed with a mixture of water (2.6 ml) and methanol (17.4 ml). The wet solid was dried at 55°C under vacuum in inert atmosphere for a period of about 16 hours (a drying period of about 16 hours to about 86 hours can also be used). The dried solid was analyzed by PXRD, Form 6 was obtained.

## Claims

1. A process for the preparation of crystalline Form 6 of Sugammadex sodium, comprising:
crystallization of Sugammadex sodium from a mixture comprising water and methanol, wherein the water is present in an amount of about 1 to about 10 ml per gram of Sugammadex sodium, and the methanol is present in an amount of about 15 to about 30 ml per gram of Sugammadex sodium, wherein the process comprises:
(i) adding methanol to a solution of Sugammadex sodium in water at a temperature of about 45°C to about 70°C;
(ii) cooling the resulting suspension to about 18°C to about 40°C;
(iii) optionally stirring the suspension for about 0.5 to about 4 hours;
(iv) optionally isolating the Sugammadex sodium, preferably by filtration; and
(v) optionally drying the Sugammadex sodium, preferably under reduced pressure;
wherein the crystalline Form 6 of Sugammadex sodium is **characterized by** an XRPD pattern having peaks at 5.5, 7.3, 10.2, 17.7 and 20.2 degrees 2-theta ± 0.2 degrees 2-theta.

2. A process according to Claim 1 wherein water is present in an amount of about 1 to about 5 ml per gram of Sugammadex sodium, or about 2 to about 4 ml per gram of Sugammadex sodium, or about 3 ml per gram of Sugammadex sodium; and/or wherein methanol is present in an amount of about 15 to about 28 ml per gram of Sugammadex sodium, or about 15 to about 25 ml per gram of Sugammadex sodium, or about 18 to about 22 ml per gram of Sugammadex sodium, or about 19 to about 21 ml per gram of Sugammadex sodium.

3. A process according to any of Claims 1-2 wherein the volume ratio of methanol to water is about 20:1 to about 3:1, or about 15:1 to about 4:1, or about 10:1 to about 5:1, or about 8:1 to about 5:1, or about 7:1 to about 6:1.

4. A process according to any of Claims 1-3 wherein step (i) comprises slow addition of methanol to the solution of Sugammadex sodium in water, preferably at a rate of about 1 ml/min to about 50 ml/min, or about 1 ml/min to about 35 ml/min.

5. A process according to any of Claims 1-4 where the solution of Sugammadex sodium in water is at a temperature of about 45°C to about 65°C, or about 50°C to about 60°C.

6. A process according to any of Claims 1-5 wherein step (ii) comprises cooling the suspension to a temperature of about 18°C to about 30°C, or about 18°C to about 25°C, or about 20°C; optionally wherein the cooling is carried out over a period of about 0.5 to about 8 hours, or about 0.5 to about 5 hours, or about 0.5 to about 3 hours.

7. A process according to any of Claims 1-6 wherein step (iii) is carried out, preferably wherein step (iii) comprises stirring the cooled suspension for about 0.5 to about 8 hours, or about 0.5 to about 5 hours, or about 0.5 to about 2 hours.

8. A process according to Claim 1-7 wherein the drying is conducted at a temperature of about 40°C to about 80°C, or at a temperature of about 45°C to about 75°C, or at a temperature of about 50°C to about 65°C, or at a temperature of about 50°C to about 60°C, optionally wherein the drying is carried out over a period of about 4 to about 90 hours, preferably about 8 to about 60 hours, more preferably about 10 to about 48 hours, and most preferably about 15 to about 24 hours; and/or wherein the drying is carried out under an inert atmosphere, preferably under nitrogen or argon; and optionally wherein the Sugammadex sodium is dried *in vacuo* in an inert atmosphere, preferably under nitrogen, at a temperature of about 50°C to about 65°C, and most preferably about 50°C to about 60°C.

9. A process according to any of Claims 1-8 further comprising combining the Sugammadex sodium with at least one pharmaceutically acceptable excipient to provide a pharmaceutical composition, preferably wherein the pharmaceutical composition is a solution for injection or for infusion.

## Patentansprüche

1. Verfahren zur Herstellung von kristalliner Form 6 von Sugammadex-Natrium, umfassend:
Kristallisation von Sugammadex-Natrium aus einer Mischung, die Wasser und Methanol umfasst, wobei das Wasser in einer Menge von etwa 1 bis etwa 10 ml pro Gramm Sugammadex-Natrium vorliegt und das Methanol in einer Menge von etwa 15 bis etwa 30 ml pro Gramm Sugammadex-Natrium vorliegt, wobei das Verfahren Folgendes umfasst:
(i) Zugeben von Methanol zu einer Lösung von Sugammadex-Natrium in Wasser bei einer Temperatur von etwa 45 °C bis etwa 70 °C;
(ii) Abkühlen der resultierenden Suspension auf etwa 18 °C bis etwa 40 °C;
(iii) gegebenenfalls Rühren der Suspension für etwa 0,5 bis etwa 4 Stunden;
(iv) gegebenenfalls Isolieren des Sugammadex-Natriums, vorzugsweise durch Filtration; und
(v) gegebenenfalls Trocknen des Sugammadex-Natriums, vorzugsweise unter vermindertem Druck;
wobei die kristalline Form 6 von Sugammadex-Natrium durch ein XRPD-Muster mit Peaks bei 5,5, 7,3, 10,2, 17,7 und 20,2 Grad 2-Theta ± 0,2 Grad 2-Theta gekennzeichnet ist.

2. Verfahren nach Anspruch 1, wobei Wasser in einer Menge von etwa 1 bis etwa 5 ml pro Gramm Sugammadex-Natrium oder etwa 2 bis etwa 4 ml pro Gramm Sugammadex-Natrium oder etwa 3 ml pro Gramm Sugammadex-Natrium vorliegt; und/oder
wobei Methanol in einer Menge von etwa 15 bis etwa 28 ml pro Gramm Sugammadex-Natrium oder etwa 15 bis etwa 25 ml pro Gramm Sugammadex-Natrium oder etwa 18 bis etwa 22 ml pro Gramm Sugammadex-Natrium oder etwa 19 bis etwa 21 ml pro Gramm Sugammadex-Natrium vorliegt.

3. Verfahren nach einem der Ansprüche 1-2, wobei das Volumenverhältnis von Methanol zu Wasser etwa 20:1 bis etwa 3:1 oder etwa 15:1 bis etwa 4:1 oder etwa 10:1 bis etwa 5:1 oder etwa 8:1 bis etwa 5:1 oder etwa 7:1 bis etwa 6:1 beträgt.

4. Verfahren nach einem der Ansprüche 1-3, wobei Schritt (i) die langsame Zugabe von Methanol zu der Lösung von Sugammadex-Natrium in Wasser umfasst, vorzugsweise mit einer Rate von etwa 1 ml/min bis etwa 50 ml/min oder etwa 1 ml/min bis etwa 35 ml/min.

5. Verfahren nach einem der Ansprüche 1-4, wobei sich die Lösung von Sugammadex-Natrium in Wasser bei einer Temperatur von etwa 45 °C bis etwa 65 °C oder etwa 50 °C bis etwa 60 °C befindet.

6. Verfahren nach einem der Ansprüche 1-5, wobei Schritt (ii) das Abkühlen der Suspension auf eine Temperatur von etwa 18 °C bis etwa 30 °C oder etwa 18 °C bis etwa 25 °C oder etwa 20 °C umfasst; gegebenenfalls wobei das Abkühlen über einen Zeitraum von etwa 0,5 bis etwa 8 Stunden oder etwa 0,5 bis etwa 5 Stunden oder etwa 0,5 bis etwa 3 Stunden durchgeführt wird.

7. Verfahren nach einem der Ansprüche 1-6, wobei Schritt (iii) durchgeführt wird, wobei Schritt (iii) vorzugsweise das Rühren der abgekühlten Suspension für etwa 0,5 bis etwa 8 Stunden oder etwa 0,5 bis etwa 5 Stunden oder etwa 0,5 bis etwa 2 Stunden umfasst.

8. Verfahren nach Anspruch 1-7, wobei das Trocknen bei einer Temperatur von etwa 40 °C bis etwa 80 °C oder bei einer Temperatur von etwa 45 °C bis etwa 75 °C oder bei einer Temperatur von etwa 50 °C bis etwa 65 °C oder bei einer Temperatur von etwa 50 °C bis etwa 60 °C durchgeführt wird, gegebenenfalls wobei das Trocknen über einen Zeitraum von etwa 4 bis etwa 90 Stunden, vorzugsweise etwa 8 bis etwa 60 Stunden, weiter bevorzugt etwa 10 bis etwa 48 Stunden und ganz besonders bevorzugt etwa 15 bis etwa 24 Stunden durchgeführt wird; und/oder wobei das Trocknen unter einer inerten Atmosphäre, vorzugsweise unter Stickstoff oder Argon, durchgeführt wird; und gegebenenfalls wobei das Sugammadex-Natrium im Vakuum in einer inerten Atmosphäre, vorzugsweise unter Stickstoff, bei einer Temperatur von etwa 50 °C bis etwa 65 °C und ganz besonders bevorzugt etwa 50 °C bis etwa 60 °C getrocknet wird.

9. Verfahren nach einem der Ansprüche 1-8, ferner umfassend das Vereinigen des Sugammadex-Natriums mit mindestens einem pharmazeutisch unbedenklichen Hilfsstoff zur Bereitstellung einer pharmazeutischen Zusammensetzung, vorzugsweise wobei es sich bei der pharmazeutischen Zusammensetzung um eine Lösung für die Injektion oder für die Infusion handelt.

## Revendications

1. Procédé de préparation de la forme cristalline 6 du sugammadex sodique, comprenant :
une cristallisation de sugammadex sodique à partir d'un mélange comprenant de l'eau et du méthanol, dans lequel l'eau est présente en une quantité d'environ 1 à environ 10 ml par gramme de sugammadex sodique, et le méthanol est présent en une quantité d'environ 15 à environ 30 ml par gramme de sugammadex sodique, dans lequel le procédé comprend :
(i) ajouter du méthanol à une solution de sugammadex sodique dans de l'eau à une température d'environ 45 °C à environ 70 °C ;
(ii) refroidir la suspension résultante jusqu'à une température d'environ 18 °C à environ 40 °C ;
(iii) éventuellement agiter la suspension pendant environ 0,5 à environ 4 heures ;
(iv) éventuellement isoler le sugammadex sodique, de préférence par filtration ; et
(v) éventuellement, sécher le sugammadex sodique, de préférence sous pression réduite ;
dans lequel la forme cristalline 6 du sugammadex sodique est **caractérisée par** un diagramme de diffraction des rayons X ayant des pics à 5,5, 7,3, 10,2, 17,7 et 20,2 degrés 2-thêta ± 0,2 degré 2-thêta.

2. Procédé selon la revendication 1, dans lequel l'eau est présente en une quantité d'environ 1 à environ 5 ml par gramme de sugammadex sodique, ou d'environ 2 à environ 4 ml par gramme de sugammadex sodique, ou d'environ 3 ml par gramme de sugammadex sodique ; et/ou dans lequel le méthanol est présent en une quantité d'environ 15 à environ 28 ml par gramme de sugammadex sodique, ou d'environ 15 à environ 25 ml par gramme de sugammadex sodique, ou d'environ 18 à environ 22 ml par gramme de sugammadex sodique, ou d'environ 19 à environ 21 ml par gramme de sugammadex sodique.

3. Procédé selon l'une quelconque des revendications 1-2, dans lequel le rapport volumique de méthanol sur l'eau est d'environ 20:1 à environ 3:1, ou d'environ 15:1 à environ 4:1, ou d'environ 10:1 à environ 5:1, ou d'environ 8:1 à environ 5:1, ou d'environ 7:1 à environ 6:1.

4. Procédé selon l'une quelconque des revendications 1-3 dans lequel l'étape (i) comprend l'ajout lent de méthanol à la solution de sugammadex sodique dans l'eau, de préférence à un débit d'environ 1 ml/min à environ 50 ml/min, ou d'environ 1 ml/min à environ 35 ml/min.

5. Procédé selon l'une quelconque des revendications 1-4 où la solution de sugammadex sodique dans l'eau est à une température d'environ 45 °C à environ 65 °C, ou d'environ 50 °C à environ 60 °C.

6. Procédé selon l'une quelconque des revendications 1-5 dans lequel l'étape (ii) comprend le refroidissement de la suspension jusqu'à une température d'environ 18 °C à environ 30 °C, ou d'environ 18 °C à environ 25 °C, ou d'environ 20 °C; éventuellement, dans lequel le refroidissement est effectué sur une période d'environ 0,5 à environ 8 heures, ou d'environ 0,5 à environ 5 heures, ou d'environ 0,5 à environ 3 heures.

7. Procédé selon l'une quelconque des revendications 1-6 dans lequel l'étape (iii) est effectuée, de préférence dans lequel l'étape (iii) comprend l'agitation de la suspension refroidie pendant environ 0,5 à environ 8 heures, ou environ 0,5 à environ 5 heures, ou environ 0,5 à environ 2 heures.

8. Procédé selon la revendication 1-7, dans lequel le séchage est effectué à une température d'environ 40 °C à environ 80 °C, ou à une température d'environ 45 °C à environ 75 °C, ou à une température d'environ 50 °C à environ 65 °C, ou à une température d'environ 50 °C à environ 60 °C, éventuellement dans lequel le séchage est effectué sur une période d'environ 4 à environ 90 heures, de préférence d'environ 8 à environ 60 heures, plus préférablement d'environ 10 à environ 48 heures, et le plus préférablement d'environ 15 à environ 24 heures ; et/ou dans lequel le séchage est effectué sous atmosphère inerte, de préférence sous azote ou argon ; et éventuellement, dans lequel le sugammadex sodique est séché sous vide dans une atmosphère inerte, de préférence sous azote, à une température d'environ 50 °C à environ 65 C°, et le plus préférablement d'environ 50 C° à environ 60 °C.

9. Procédé selon l'une quelconque des revendications 1-8 comprenant en outre la combinaison du sugammadex sodique avec au moins un excipient pharmaceutiquement acceptable pour fournir une composition pharmaceutique, de préférence dans lequel la composition pharmaceutique est une solution pour injection ou pour perfusion.
